# EUROPÄISCHE PATENTSCHRIFT

(11) **EP 2 878 742 B1**
(45) Veröffentlichungstag und Bekanntmachung des Hinweises auf die Patenterteilung: **27.07.2016**
(21) Anmeldenummer: 14003292.1
(22) Anmeldetag: 23.09.2014
(51) Int. Cl.: E04F 11/025, F16B 3/00, F16B 5/02, F16B 1/00, E04B 1/48, F16B 19/02

(54) **Treppenwangenbefestigungsanordnung bei insbesondere fertigem Estrichbodenbelag**
Stair stringer fixing assembly, in particular for finished screed covering
Agencement de fixation de limon pour notamment revêtement de sol coulé fini

(30) Priorität: 16.10.2013 DE 102013017182
(43) Veröffentlichungstag der Anmeldung: 03.06.2015
(73) Patentinhaber: X-Hotwood GmbH, 83224 Grassau (DE)
(72) Erfinder: Frisch, Max, 83224 Grassau (DE)
(74) Vertreter: Andrae | Westendorp Patentanwälte Partnerschaft

(56) Entgegenhaltungen:
- EP-A1- 0 489 251
- DE-A1-102004 024 036
- JP-A- 2005 232 924
- US-A1- 2002 157 343

## Beschreibung

Die vorliegende Erfindung betrifft eine Treppenwangenbefestigungsanordnung nach dem Oberbegriff des Patentanspruchs 1 sowie ein Verfahren zur Befestigung einer Treppenwange nach dem Patentanspruch 6. Eine gattungsgemäße Treppenwangenbefestigungsanordnung ist aus EP 0 489 251 bekannt. Bekannte Befestigungen für Treppenwangen am Boden an der Antrittsseite der Treppe umfassen einen 90°-Stahlwinkel, der mit Holzschrauben in der Treppenwange und mit einem Metalldübel und mit einer Stahlschraube am Boden befestigt wird. Die beiden Schrauben sind 90° zueinander verlaufend angeordnet. Zum Einbringen des Metalldübels in eine Rohbetondecke muß bei dieser Befestigungsart der Estrichbodenbelag aufgestemmt werden. In der Praxis wurde jedoch festgestellt, dass das Aufstemmen häufig unterlassen wird und der Stahlwinkel einfach oben auf den Estrichbodenbelag aufgesetzt und verschraubt wird. Allerdings kann bei dieser Befestigungsart der Treppenwange der Estrich nicht dauerhaft die Kräfte aufnehmen, so dass es in ungünstigen Fällen zu Setzbeträgen kommen kann. Die Treppenwange wackelt.

Ein weiterer Stand der Technik ist aus der DE 10 2004 024 036 bekannt. Dort wird das Thema Estrichbodenbelag nicht erwähnt, jedoch soll eine Entkopplung der Treppe vom Baukörper erfolgen, um die Weitergabe von Trittschall zu unterbinden. Nach der DE 10 2004 024 036 wird zwischen Treppenwange und Baukörper ein Dämmmaterial eingelegt (siehe dort Anspruch 1) sowie Metallplatten, um die Last besser zu verteilen, da das Dämmmaterial zu weich bzw. elastisch ist. Zur Verbindung zwischen Baukörper und Treppenwange wird ein Bolzen verwendet.

Eine justierbare Höheneinstellung der Treppenwange über dem Boden ist bei der oben genannten Befestigungsart für Treppenwangen nicht vorgesehen.

Es ist die daher Aufgabe der vorliegenden Erfindung, eine Treppenwangenbefestigung, insbesondere an fertigem Estrichbodenbelag, zu schaffen, die neben einer sicheren und dauerhaften Befestigung die Höheneinstellbarkeit vor Ort durch den Handwerker gewährleistet.

Die Erfindung weist zur Lösung dieser Aufgabe die im Patentanspruch 1 oder 6 angegebenen Merkmale auf. Vorteilhafte Ausgestaltungen hiervon sind in den weiteren Unteransprüchen angegeben.

Gemäß Patentanspruch 1 umfasst die erfindungsgemäße Treppenwangenbefestigungsanordnung an insbesondere fertigem Estrichbodenbelag einen Haltekörper, der ein Innengewinde aufweist; einen Gewindebolzen, der ein dazu passendes Außengewinde aufweist, wobei der Gewindebolzen mit seinem unteren Ende in einer Sackbohrung in einer Rohbetondecke unterhalb des Estrichbodenbelags eingeschraubt und/oder eingeklebt ist; wobei der Haltekörper auf das obere Ende des Gewindebolzens aufgeschraubt ist, und wobei eine Treppenwange eine zur äußeren Form des Haltekörpers komplementäre Aussparung aufweist, so dass die Treppenwange passgenau über den Haltekörper mit der Aussparung aufsetzbar ist, und wobei ein Haltebolzen durch eine erste Bohrung in der Treppenwange und durch eine zweite dazu ausgerichtete Bohrung im Haltekörper passgenau eingeschlagen ist.

Besonders bevorzugt weist der Haltekörper nach Patentanspruch 2 zumindest an seiner Umfangskante, die der Treppenwange zugewandt ist, eine Fase auf, um das Aufsetzen der Treppenwange zu erleichtern.

Nach Patentanspruch 3 kann bei einer bevorzugten Ausführungsform der vorliegenden Erfindung treppenantrittsseitig ein Pfosten benachbart der Treppenwange vorgesehen sein, wobei der Haltebolzen durch eine dritte Bohrung im Pfosten und dann durch die erste Bohrung in der Treppenwange und durch die zweite Bohrung im Haltekörper eingeschlagen wird.

Vorteilhafterweise ist der Haltekörper aus Aluminium, einer Aluminiumlegierung oder aus Edelstahl gefertigt. Ist der Haltekörper aus Aluminium, so kann ein Handwerker vor Ort mit einer einfachen Säge die Länge des Haltekörpers durch Absägen anpassen, falls erforderlich.

Verlaufen die Bohrungsachse der Bohrung im Haltekörper sowie die Gewindebolzenachse senkrecht zueinander, so ist die Fertigung der Bauteile einfacher und damit kostengünstiger. Zudem ist die Montage der Treppenwange einfacher und maßgetreuer möglich.

Das erfindungsgemäße Verfahren zur Befestigung einer Treppenwange, insbesondere bei fertigem Estrichbodenbelag, zeichnet sich durch die Folgenden Schritte aus:
- Einbringen einer im Durchmesser größeren ersten Sackbohrung bis zu einer ersten Tiefe und bis zu einer Oberfläche der Rohbetondecke;
- Einbringen einer im Durchmesser dazu kleineren zweiten Sackbohrung bis zu einer zweiten größeren Tiefe am Grund der ersten Sackbohrung;
- Einschrauben und/oder Einkleben eines Gewindebolzens in die zweite Sackbohrung;
- Aufschrauben eines Haltekörpers auf das obere Ende des Gewindebolzens;
- Einstellen der Höhe des Haltekörpers über der Oberfläche des Estrichbodenbelags mittels des Gewindes;
- Aufsetzen der Treppenwange auf den Haltekörper, wobei die Treppenwange eine entsprechende passgenaue Aussparung aufweist, deren Form komplementär zur äußeren Form des Haltekörpers ausgebildet ist; und
- Einschlagen eines passgenauen Haltebolzens durch eine erste Bohrung in der Treppenwange und durch eine dazu ausgerichtete zweite Bohrung im Haltekörper.

Vorzugsweise kann am antrittseitigen Ende der Treppenwange nach Patentanspruch 7 ein vertikaler Pfosten vorgesehen werden, wobei das Einschlagen des passgenauen Haltebolzens durch eine dazu ausgerichtete dritte Bohrung im Pfosten und dann durch die erste Bohrung in der Treppenwange und durch die zweite Bohrung im Haltekörper erfolgt.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im folgenden anhand der Zeichnungen näher erläutert. Diese zeigen in:
Fig. 1 eine Prinzipskizze der vorliegenden Erfindung; und
Fig. 2 eine teilweise perspektivische und teilweise schematische Ansicht der erfindungsgemäßen Treppenwangenbefestigungsanordnung.

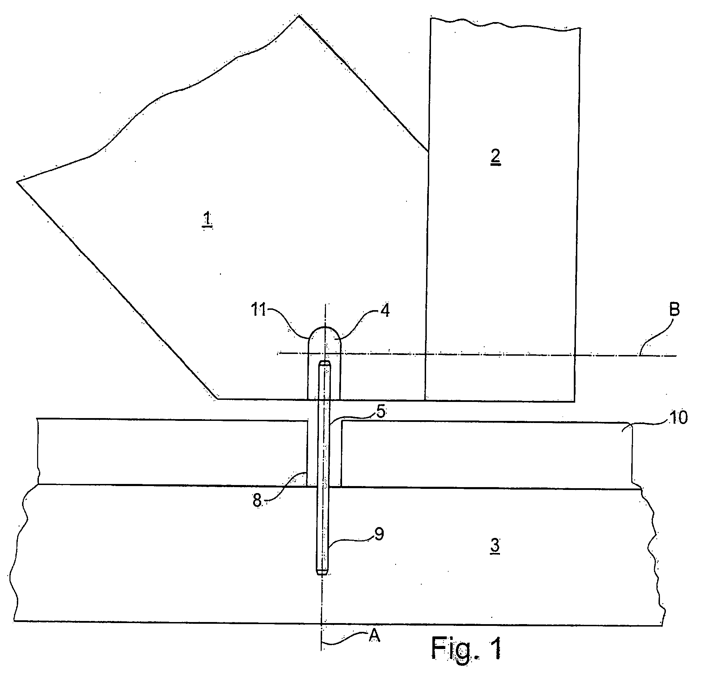

Gemäß der Skizze in Figur 1 umfasst die erfindungsgemäße Treppenwangenbefestigungsanordnung einen Haltekörper 4, der mittels eines Gewindebolzens 5 in einer Rohbetondecke 3 befestigt ist. Der Gewindebolzen 5 wird durch eine Öffnung bzw. erste Sackbohrung 8 in einem Estrichbodenbelag 10, die einen etwas größeren Durchmesser aufweist, als der Durchmesser des Gewindebolzens 5 in eine zweite Sackbohrung 9 in der Rohbetondecke 3 eingebracht und dort vorzugsweise verklebt und/oder auch verschraubt, beispielsweise mittels eines Dübels (nicht dargestellt). Der Gewindebolzen 5 kann beispielhaft einen Durchmesser von 16 mm aufweisen. Der Durchmesser der Sackbohrung 8 ist größer als der Druchmesser des Gewindebolzens 5 und erlaubt dadurch minimale seitliche Verlagerungen des Gewindebolzens 5 oberhalb der Rohbetondecke 3, sofern die Treppe infolge veränderter Umgebungsbedingungen, wie zum Beispiel Temperatur- oder Luftfeuchtigkeitsschwankungen eine Dimensionsveränderung erfahren sollte. Ebenso können dadurch Aufmaßtoleranzen kompensiert werden.

Am oberen Ende des Gewindebolzens 5 ist der Haltekörper 4 aufgeschraubt. Dazu weist der Haltekörper 4 ein entsprechendes Innengewinde auf. Mittels des Gewindes lässt sich die Höhe des Haltekörpers 4 über dem Estrichbodenbelag einfach einstellen. Eine Treppenwange 1 weist eine Aussparung 11 auf, die in der Kontur der äußeren Form des Haltekörpers 4 entspricht.

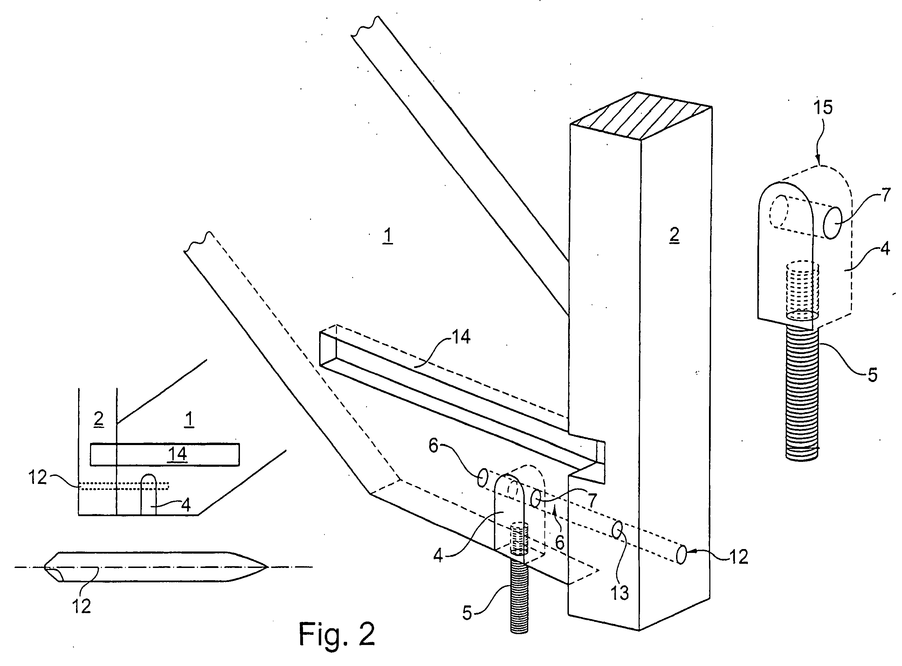

Vorzugsweise weist der Haltekörper 4 an seiner der Treppenwange 1 zugewandten Seite eine umlaufende Fase 15 (siehe auch Figur 2) an der Kante auf, um das passgenaue Aufsetzen der Treppenwange 1 auf den Haltekörper 4 zu erleichtern.

Nach dem Aufsetzen der Treppenwange 1 auf den Haltekörper 4 wird entlang der Bohrungsachse B ein Haltebolzen 12 (Figur 2) eingeschlagen. Der Haltebolzen 12 verläuft nach dem Einschlagen durch die Treppenwange 1 entlang der Bohrungsachse B sowie durch eine zweite Bohrung 7 in dem Haltekörper 4. Die zweite Bohrung 7 in dem Haltekörper 4 ist mit einer ersten Bohrung 6 in der Treppenwange 1 ausgerichtet.

Wie es in der Figur 1 dargestellt ist, kann vorzugsweise ein Pfosten 2 am antrittsseitigen Ende der Treppenwange 1 vorgesehen sein. Der Haltebolzen 12 verläuft dann zuerst durch eine dritte Bohrung 13 im Pfosten 2 bevor er durch die Treppenwange 1 und den Haltekörper 4 in die beiden Bohrungen 6 und 7 eingeschlagen wird.

Besonders bevorzugt ist der Haltekörper 4 am oberen Ende, über das die Treppenwange 1 aufgesetzt wird, halbrund ausgeführt, um die passgenaue Montage weiter zu vereinfachen.

Die Figur 2 zeigt in einer perspektivischen Ansicht (Darstellung in der Mitte und rechts) die erfindungsgemäße Treppenwangenbefestigungsanordnung für die Treppenwange 1, wobei der Pfosten 2 antrittsseitig vorgesehen ist. Eine Einlassung 14 ist an der Treppenwange 1 und dem Pfosten 2 eingearbeitet, um dort eine erste Stufe (nicht dargestellt) der Treppe anzuordnen. Die Treppenwange 1 wird nun über den Haltekörper 4, der passgenau in die Aussparung 11 eingeführt ist, sowie über die Gewindestange 5, die in der Rohbetondecke 3 verankert ist, sowie mittels des Haltebolzens 12, der entlang der Bohrungsachse B eingeschlagen wird, einfach und sicher befestigt. Der Haltebolzen 12 durchdringt beim Einschlagen zuerst die dritte Bohrung 13 in dem Pfosten 2, dann die erste Bohrung 6 in der Treppenwange 1, dann die zweite Bohrung 7 in dem Haltekörper 4 und zuletzt wiederum die Bohrung 6 in der Treppenwange 1.

Im linken Teil der Figur 2 ist schematisch der Haltebolzen 12 sowie die Durchdringung der drei Bauteile Pfosten 2, Treppenwange 1 und Haltekörper 4 dargestellt.

Das erfindungsgemäße Verfahren zur Befestigung der Treppenwange 1, insbesondere bei fertigem Estrichbodenbelag 10, zeichnet sich demnach durch die Folgenden Schritte aus:
- Einbringen einer im Durchmesser größeren ersten Sackbohrung 8 bis zu einer ersten Tiefe und bis zu einer Oberfläche der Rohbetondecke 3;
- Einbringen einer im Durchmesser dazu kleineren zweiten Sackbohrung 9 bis zu einer zweiten größeren Tiefe am Grund der ersten Sackbohrung 8;
- Einschrauben und/oder Einkleben eines Gewindebolzens 5 in die zweite Sackbohrung 9;
- Aufschrauben eines Haltekörpers 4 auf das obere Ende des Gewindebolzens 5;
- Einstellen der Höhe des Haltekörpers 4 über der Oberfläche des Estrichbodenbelags 10 mittels des Gewindes;
- Aufsetzen der Treppenwange 1 auf den Haltekörper 4, wobei die Treppenwange 1 eine entsprechende passgenaue Aussparung 11 aufweist, deren Form komplementär zur äußeren Form des Haltekörpers 4 ausgebildet ist; und
- Einschlagen eines passgenauen Haltebolzens 12 durch eine erste Bohrung 6 in der Treppenwange 1 und durch eine dazu ausgerichtete zweite Bohrung 7 im Haltekörper 4.

Vorzugsweise kann der Pfosten 2 antrittsseitig an der Treppenwange 1 vorgesehen werden, wobei der Haltebolzen 12 dann auch durch eine dritte Bohrung 13 in dem Pfosten 2 verläuft, wobei die Bohrungen 6, 7 und 13 alle zueinander ausgerichtet sind und in der Bohrungsachse B liegen.

Bevorzugt ist der Haltekörper 4 aus Aluminium, einer Aluminiumlegierung oder aus Edelstahl gefertigt. Ist der Haltekörper 4 aus Aluminium, so kann ein Handwerker vor Ort mit einer einfachen Säge die Länge des Haltekörpers 4 durch Absägen anpassen, falls erforderlich.

Die Bohrungsachse B der Bohrung 7 im Haltekörper 4 sowie die Gewindebolzenachse A verlaufen senkrecht zueinander, so dass die Fertigung der Bauteile einfacher und damit kostengünstiger. Zudem ist die Montage der Treppenwange 1 einfacher und maßgetreuer auszuführen.

Hinsichtlich vorstehend im einzelnen nicht näher erläuterter Merkmale der Erfindung wird in übrigen ausdrücklich auf die Patentansprüche und die Zeichnungen verwiesen.

### Bezugszeichenliste

- 1: Treppenwange
- 2: Pfosten
- 3: Rohbetondecke
- 4: Haltekörper
- 5: Gewindebolzen
- 6: Erste Bohrung
- 7: Zweite Bohrung
- 8: Erste Sackbohrung
- 9: Zweite Sackbohrung
- 10: Estrichbodenbelag
- 11: Aussparung
- 12: Haltebolzen
- 13: Dritte Bohrung
- 14: Einlassung (für eine Treppenstufe)
- 15: Fase

- A: Gewindebolzenachse
- B: Bohrungsachse

## Patentansprüche

1. Treppenwangenbefestigungsanordnung an insbesondere fertigem Estrichbodenbelag (10) wobei.
- ein Haltekörper (4) vorgesehen ist, der ein Innengewinde aufweist;
- ein Gewindebolzen (5) vorgesehen ist, der ein dazu passendes Außengewinde aufweist, wobei der Gewindebolzen (5) mit seinem unteren Ende in einer Sackbohrung (9) in einer Rohbetondecke (3) unterhalb des Estrichbodenbelags (10) eingeschraubt und/oder eingeklebt ist;
sowie der Haltekörper (4) auf das obere Ende des Gewindebolzens (5) aufgeschraubt ist, und
- eine Treppenwange (1) eine zur äußeren Form des Haltekörpers (4) komplementäre Aussparung (11) aufweist, so dass die Treppenwange (1) passgenau über den Haltekörper (4) mit der Aussparung (11) aufsetzbar ist, **dadurch gekennzeichnet, dass**
- ein Haltebolzen (12) durch eine erste Bohrung (6) in der Treppenwange (1) und durch eine zweite dazu ausgerichtete Bohrung (7) im Haltekörper (4) passgenau eingeschlagen ist.

2. Treppenwangenbefestigungsanordnung nach Anspruch 1, **dadurch gekennzeichnet, dass** der Haltekörper (4) zumindest an seiner Umfangskante, die der Treppenwange (1) zugewandt ist, eine Fase (15) aufweist, um das Aufsetzen der Treppenwange (1) zu erleichtern.

3. Treppenwangenbefestigungsanordnung nach Anspruch 1 oder 2, **dadurch gekennzeichnet, dass** treppenantrittsseitig ein Pfosten (2) benachbart der Treppenwange (1) vorgesehen ist, wobei der Haltebolzen (12) durch eine dritte Bohrung (13) im Pfosten (2) und dann durch die erste Bohrung (6) in der Treppenwange (1) und durch die zweite Bohrung (7) im Haltekörper (4) eingeschlagen wird.

4. Treppenwangenbefestigungsanordnung nach einem der Ansprüche 1 bis 3, **dadurch gekennzeichnet, dass** der Haltekörper (4) aus Aluminium, einer Aluminiumlegierung oder aus Edelstahl gefertigt ist.

5. Treppenwangenbefestigungsanordnung nach einem der Ansprüche 1 bis 4, **dadurch gekennzeichnet, dass** die Bohrungsachse (B) der Bohrung (7) im Haltekörper (4) senkrecht zur Gewindebolzenachse (A) verläuft.

6. Verfahren zur Befestigung einer Treppenwange (1), insbesondere bei fertigem Estrichbodenbelag (10) aufweisend die Folgenden Schritte:
- Einbringen einer im Durchmesser größeren ersten Sackbohrung (8) bis zu einer ersten Tiefe und bis zu einer Oberfläche der Rohbetondecke (10);
- Einbringen einer im Durchmesser dazu kleineren zweiten Sackbohrung (9) bis zu einer zweiten größeren Tiefe am Grund der ersten Sackbohrung (8);
- Einschrauben und/oder Einkleben eines Gewindebolzens (5) in die zweite Sackbohrung (9);
- Aufschrauben eines Haltekörpers (4) auf das obere Ende des Gewindebolzens (5);
- Einstellen der Höhe des Haltekörpers (4) über der Oberfläche des Estrichbodenbelags (10) mittels des Gewindes;
- Aufsetzen der Treppenwange (1) auf den Haltekörper (4), wobei die Treppenwange (1) eine entsprechende passgenaue Aussparung (11) aufweist, deren Form komplementär zur äußeren Form des Haltekörpers (4) ausgebildet ist; **gekennzeichnet durch**
- Einschlagen eines passgenauen Haltebolzens (12) **durch** eine erste Bohrung (6) in der Treppenwange (1) und **durch** eine dazu ausgerichtete zweite Bohrung (7) im Haltekörper (4).

7. Verfahren nach Anspruch 6, wobei am antrittseitigen Ende der Treppenwange (1) ein Pfosten (2) vorgesehen ist, **dadurch gekennzeichnet, dass** das Einschlagen des passgenauen Haltebolzens (12) durch eine dazu ausgerichtete dritte Bohrung (13) im Pfosten (2) und dann durch die erste Bohrung (6) in der Treppenwange (1) und durch die zweite Bohrung (7) im Haltekörper (4) erfolgt.

## Claims

1. Arrangement for attaching a stair stringer to screed flooring (10), in particular finished screed flooring,
- a retaining body (4) being provided which has an internal thread;
- a threaded bolt (5) being provided which has an external thread that matches said internal thread, the threaded bolt (5) being screwed and/or glued into a blind hole (9) in a raw concrete floor (3) underneath the screed flooring (10) by its lower end;
- and the retaining body (4) being screwed onto the upper end of the threaded bolt (5); and
- a stair stringer (1) comprising a recess (11) that complements the external shape of the retaining body (4) such that the stair stringer (1) can be placed over the retaining body (4) with an exact fit by means of the recess (11), **characterised in that**
- a retaining bolt (12) is driven, with an exact fit, through a first hole (6) in the stair stringer (1) and through a second hole (7) in the retaining body (4) that is aligned with said first hole.

2. Stair stringer attachment arrangement according to claim 1, **characterised in that** the retaining body (4) has a chamfer (15) at least on its peripheral edge facing the stair stringer (1) in order to make it easier to fit the stair stringer (1).

3. Stair stringer attachment arrangement according to either claim 1 or claim 2, **characterised in that** a post (2) is provided at the starting step, adjacent to the stair stringer (1), the retaining bolt (12) being driven through a third hole (13) in the post (2) and then through the first hole (6) in the stair stringer (1) and through the second hole (7) in the retaining body (4).

4. Stair stringer attachment arrangement according to any of claims 1 to 3, **characterised in that** the retaining body (4) is made of aluminium, an aluminium alloy or of stainless steel.

5. Stair stringer attachment arrangement according to any of claims 1 to 4, **characterised in that** the axis (B) of the hole (7) in the retaining body (4) extends perpendicularly to the threaded bolt axis (A).

6. Method for attaching a stair stringer (1), in particular in finished screed flooring (10), comprising the following steps:
- making a first blind hole (8) having a relatively large diameter down to a first depth and down to a surface of the raw concrete floor (10);
- making a second blind hole (9), which has a smaller diameter than the first blind hole, at the bottom of the first blind hole (8) down to a second greater depth;
- screwing and/or glueing a threaded bolt (5) into the second blind hole (9);
- screwing a retaining body (4) onto the upper end of the threaded bolt (5);
- adjusting the height of the retaining body (4) above the surface of the screed flooring (10) by means of the thread;
- placing the stair stringer (1) on the retaining body (4), the stair stringer (1) having a corresponding recess (11) having an exact fit, the shape of which complements the external shape of the retaining body (4), **characterised by**
- a retaining bolt (12) that has an exact fit being driven through a first hole (6) in the stair stringer (1) and through a second hole (7) in the retaining body (4) that is aligned with said first hole.

7. Method according to claim 6, a post (2) being provided at the starting-step end of the stair stringer (1), **characterised in that** the retaining bolt (12) having the exact fit is driven through a third hole (13) in the post (2) aligned therewith and then through the first hole (6) in the stair stringer (1) and through the second hole (7) in the retaining body (4).

## Revendications

1. Agencement de fixation d'un limon d'escalier sur une chape de sol, en particulier finie (10), dans lequel
- il est prévu un corps de maintien (4) qui présente un taraudage ;
- il est prévu un boulon fileté (5) qui présente un filetage adéquat, le boulon fileté (5) ayant son extrémité inférieure vissée et/ou collée dans un trou borgne (9) percé dans une dalle de béton brute (3) au-dessous de la chape de sol (10),
et le corps de maintien (4) est vissé sur l'extrémité supérieure du boulon fileté (5), et
- un limon (1) présente une échancrure (11) complémentaire à la forme extérieure du corps de maintien (4), de sorte que le limon (1) est susceptible d'être posé avec l'échancrure (11) précisément au-dessus du corps de maintien (4),
**caractérisé en ce que**
- un boulon de maintien (12) est enfoncé précisément à travers un premier trou (6) percé dans le limon (1) et à travers un second trou (7) aligné avec celui-ci dans le corps de maintien (4).

2. Agencement de fixation de limon selon la revendication 1, **caractérisé en ce que** le corps de maintien (4) présente un chanfrein (15) au moins sur son arête périphérique tournée vers le limon (1), afin de faciliter la pose du limon (1).

3. Agencement de fixation de limon selon la revendication 1 ou 2, **caractérisé en ce qu'**il est prévu un poteau (2) au voisinage du limon (1) du côté de la première marche, le boulon de maintien (12) étant enfoncé à travers un troisième trou (13) percé dans le poteau (2) et ensuite à travers le premier trou (6) percé dans le limon (1) et à travers le second trou (7) percé dans le corps de maintien (4).

4. Agencement de fixation de limon selon l'une des revendications 1 à 3, **caractérisé en ce que** le corps de maintien (4) est réalisé en aluminium, en un alliage d'aluminium ou en acier inoxydable.

5. Agencement de fixation de limon selon l'une des revendications 1 à 4, **caractérisé en ce que** l'axe de perçage (B) du trou (7) percé dans le corps de maintien (4) s'étend perpendiculairement à l'axe (A) du boulon fileté.

6. Procédé de fixation d'un limon (1), en particulier sur une chape de sol finie (10), comprenant les étapes suivantes :
- on perce un premier trou borgne (8) de grand diamètre jusqu'à une première profondeur et jusqu'à une surface de la dalle de béton brute (3) ;
- on perce un second trou borgne (9) de diamètre plus petit jusqu'à une seconde profondeur plus importante au fond du premier trou borgne (8) ;
- on visse et/ou on colle un boulon fileté (5) dans le second trou borgne (9) ;
- on visse un corps de maintien (4) sur l'extrémité supérieure du boulon fileté (5) ;
- on ajuste la hauteur du corps de maintien (4) au-dessus de la surface de la chape de sol (10) au moyen du pas de vis ;
- on pose le limon (1) sur le corps de maintien (4), le limon (1) présentant une échancrure (11) correspondante précisément ajustée dont la forme est réalisée de façon complémentaire à la forme extérieure du corps de maintien (4) ;
**caractérisé en ce que**
- on enfonce un boulon de maintien (12) précisément ajusté à travers un premier trou (6) percé dans le limon (1) et à travers un second trou (7) aligné avec celui-ci percé dans le corps de maintien (4).

7. Procédé selon la revendication 6, dans lequel un poteau (2) est prévu à l'extrémité du limon (1) côté première marche, **caractérisé en ce que** l'on enfonce le boulon de maintien (12) précisément ajusté à travers un troisième trou (13) aligné avec celui-ci percé dans le poteau (2), et puis à travers le premier trou (6) percé dans le limon (1) et à travers le second trou (7) percé dans le corps de maintien (4).
